# EUROPEAN PATENT SPECIFICATION

(11) **EP 4 124 239 B1**
(45) Date of publication and mention of the grant of the patent: **02.04.2025**
(21) Application number: 22185825.1
(22) Date of filing: 19.07.2022
(51) Int. Cl.: A01G 9/08, A01C 7/04, A01C 19/02

(54) **SEEDING MACHINE**
SÄMASCHINE
MACHINE D'ENSEMENCEMENT

(30) Priority: 28.07.2021 IT 202100020093
(43) Date of publication of application: 01.02.2023
(73) Proprietor: Atlantic Man S.r.l., 42024 Castelnovo Di Sotto (RE) (IT)
(72) Inventor: CARRETTI, Alfeo, 42028 POVIGLIO (RE) (IT)
(74) Representative: Corradini, Corrado

(56) References cited:
- CN-A- 110 558 112
- JP-A- 2007 129 962
- KR-Y1- 200 395 948
- US-A- 3 012 370

## Description

### TECHNICAL FIELD

The present invention relates to a seeding machine, preferably a seeding machine (of the pneumatic and/or electropneumatic type) configured to deposit seeds in a seeding tray comprising a plurality of seeding cells.

### PRIOR ART

They are known seeding machines of the pneumatic and/or electropneumatic type comprising a conveyor on which seeding trays filled with soil or loam are advanced, on which markers are firstly made by means of a marker roller and within each marker a seed is deposited by means of a seeding roller.

A first known type of seeding machines provides the use of a motorised belt conveyor on which the seeding trays advance. The marker roller and seeding roller are driven by respective motors that are independent of the conveyor motor and their rotation thereof is made synchronous to the conveyor motor by a suitable control system.

Such a type of machine, although high-performing, is rather complex and expensive and requires fine-tuning and continuous maintenance operations.

A second well-known type of seeding machines provides a "sleeper" conveyor, in which the conveyor consists of a fixed rest plane on which the trays, pushed at the back between sleepers, run. Such sleepers (with a fixed pitch) are driven by a motor, which by means of a suitable rigid transmission assembly also transmits the motion to the marker roller and seeding roller. The position of the sleepers is such that the rotation of the marker and seeding roller is synchronised with the advancement of the seeding tray.

Although this second type of seeding machines is simpler and more robust than the first type of seeding machines, it is not particularly suitable for use with particularly light or flexible seeding trays, which do not withstand a rear thrust.

A further known seeding machine according to the preamble of claim is disclosed in document: JP 2007 129962 A.

An object of the present invention is to overcome the aforementioned drawbacks of the prior art, within the framework of a simple, rational and cost-effective solution, by creating a seeding machine that is as structurally simple as a seeding machine of the second type, with the consequent advantages of requiring less set-up and maintenance operations, and that is as versatile as the seeding machines of the first type described above.

These and other objects are reached by the characteristics of the invention as set forth in independent claim 1.

The dependent claims outline preferred and/or particularly advantageous aspects of the invention.

### DISCLOSURE OF THE INVENTION

The invention, in particular, makes available a seeding machine comprising:
- a frame;
- a conveyor defining a rest plane for seeding trays and equipped with a motor configured to advance the seeding trays on the rest plane along an advancement direction;
- a seeding roller rotatably associated with the frame, around a rotation axis parallel to the rest plane, and arranged above the rest plane;
- a transmission assembly interposed between the motor of the conveyor and the seeding roller configured to transmit a rotary motion from the motor to the seeding roller;
wherein the transmission assembly comprises a friction clutch configured to be selectively switched between a closed position, in which it allows the transmission of the rotary motion from the motor of the conveyor to the seeding roller, and an open position, in which it interrupts the transmission of the rotary motion from the motor of the conveyor to the seeding roller.

Thanks to this solution, the seeding roller may be driven by the same motor as the conveyor and, at the same time, may be synchronised thereto without the need for rear thrusting means physically acting on the seeding tray.

Advantageously, the machine may comprise a system for detecting a seeding tray resting on a section of the rest plane located upstream of the seeding roller along the advancement direction.

Furthermore, the machine may include an electronic control unit operatively connected to the detection system and to the friction clutch, wherein the electronic control unit is configured to:
- receive a signal from the detection system;
- control the friction clutch so as to switch it to its closed position on the basis of the signal received.

Advantageously, the electronic control unit may be configured to:
- keep the friction clutch in the closed position for a predetermined whole number of full revolutions of the seeding roller.

Again, the electronic control unit may be configured to:
- control the friction clutch so as to switch it to its open position after a predetermined whole number of revolutions performed by the seeding roller.

According to one aspect of the invention, the machine may comprise an assembly for adjusting a distance between the seeding roller and the conveyor rest plane, wherein preferably the adjusting assembly is motorised.

Furthermore, the machine may also comprise a marker roller rotatably associated with the support frame, around a rotation axis parallel to the rest plane and to the rotation axis of the seeding roller, whereby the marker roller is arranged around the rest plane upstream of the seeding roller in the advancement direction. For example, the marker roller may also be associated with a further friction clutch, operating in the same way as described above for the seeding roller.

Within the context of this aspect, the machine may comprise a further transmission assembly interposed between the conveyor motor and the marker roller configured to transmit a rotary motion from the motor to the marker roller and equipped with a further friction clutch configured to selectively be switched between a closed position, in which it allows the transmission of the rotary motion from the motor of the conveyor to the marker roller, and an open position, in which it interrupts the transmission of the rotary motion from the motor of the conveyor to the marker roller.

According to a possible embodiment, the machine may comprise a plurality of seeding rollers (and/or marker rollers) with mutually parallel rotation axes arranged in succession on the rest plane along the advancement direction, wherein each seeding roller may be preferably driven selectively or simultaneously with respect to the other seeding rollers and/or is configured to seed a respective type of seeding trays or to seed in the same tray.

### BRIEF DESCRIPTION OF THE DRAWINGS

Further features and advantages of the invention will be more apparent after reading the following description provided by way of non-limiting example, with the aid of the accompanying drawings.

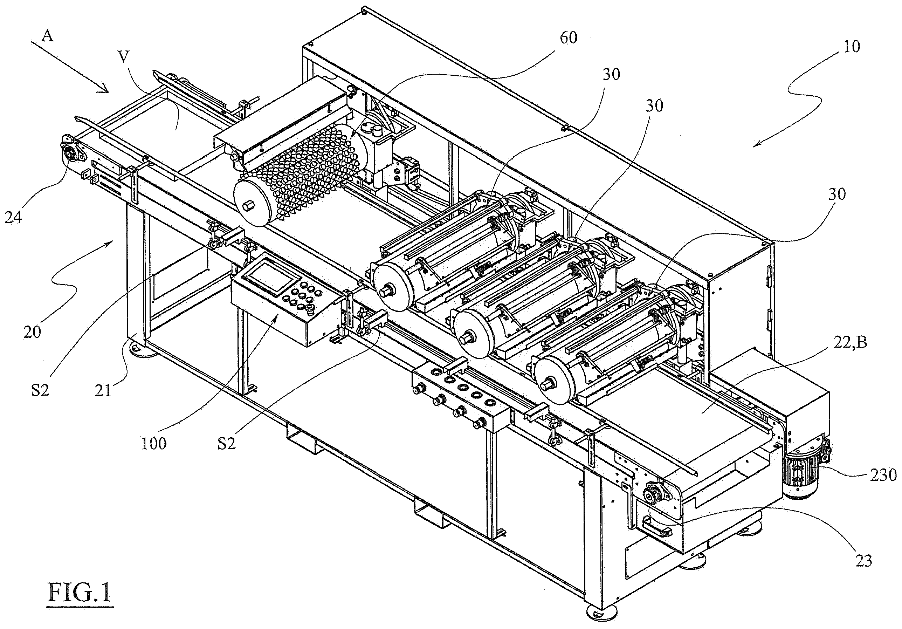

Figure 1 is a front axonometric view of a seeding machine according to the invention.

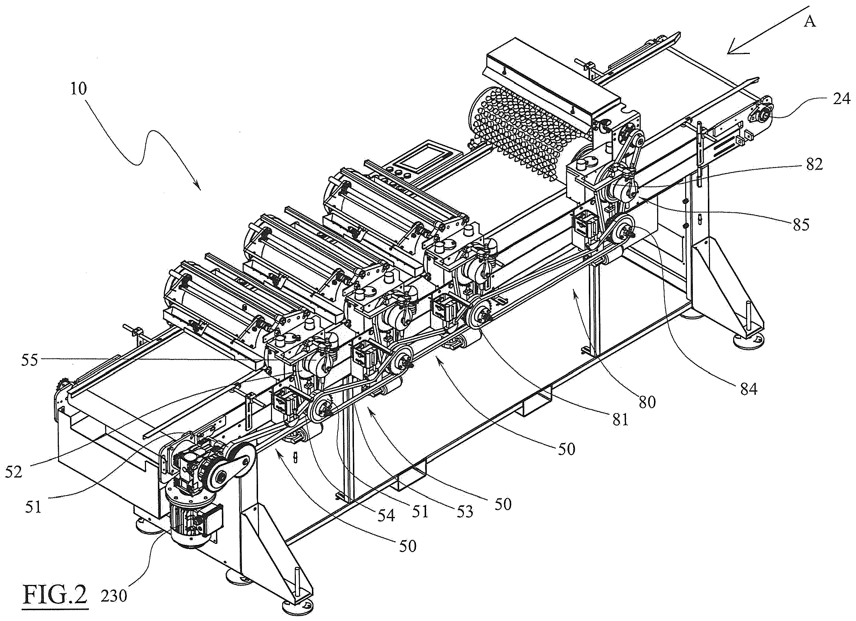

Figure 2 is a rear axonometric view of the machine of Figure 1.

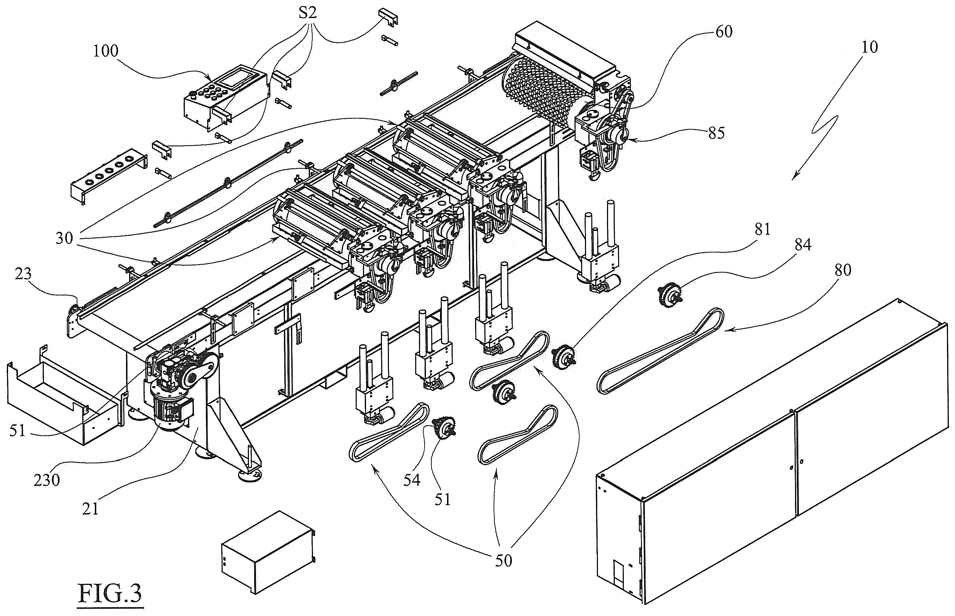

Figure 3 is an exploded view of the rear axonometric view of the machine in Figure 1.

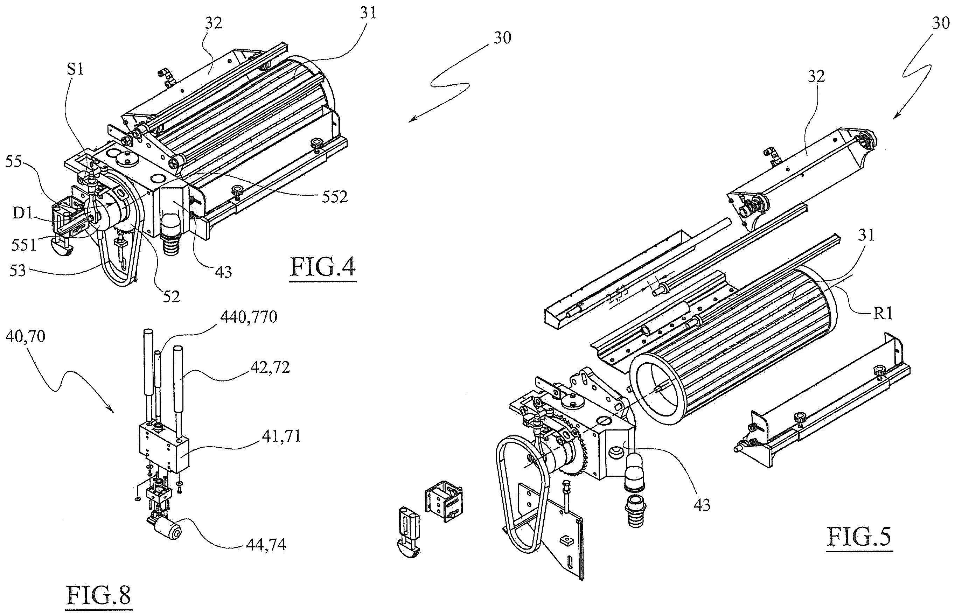

Figure 4 is a rear axonometric view of a seeding roller of the machine in Figure 1.
Figure 5 is an exploded view of Figure 4.
Figure 6 is an axonometric view of a marker roller of the machine in Figure 1.
Figure 7 is an exploded view of Figure 6.
Figure 8 is an exploded view of an adjustment assembly of a seeding roller and/or marker roller of the machine according to the invention.

### BEST MODE TO IMPLEMENT THE INVENTION

With particular reference to these figures, 10 globally indicates a seeding machine, in particular for seeding into seeding trays V previously filled with soil or loam.

The machine 10 is part of a seeding system that provides a machine filling the trays with soil/loam that is placed upstream of the machine 10 and from which it receives the seeding trays V filled with soil or loam.

The seeding tray V, for example, is divided into cells, each of which is filled with a respective portion of soil/loam and is intended to accommodate at least one seed (or a plurality of seeds) therein. A seeding tray, therefore, has a plurality of rows of cells, wherein the cells of each row are arranged side by side along a flanking direction and the rows of cells are parallel (adjacent) to each other and aligned along an alignment direction orthogonal to the flanking direction.

The machine 10 includes a conveyor 20, which is configured to support at least one seeding tray V resting on a lower surface thereof opposite to the upper surface to be seeded.

The conveyor 20 comprises a support frame 21 provided with ground supports and a (single) conveyor belt 22 supported by the support frame 21.

For example, the support frame 21 comprises two fork seats to be transported/moved using a fork vehicle.

The conveyor belt 22 is defined by a (single) flexible belt wrapped around itself in a loop around at least one drive roller 23 and at least one (end) driven roller 24.

The drive roller 23 is configured to move/rotate the conveyor belt 22 along a closed annular path, so that an upper branch of the conveyor belt 22 moves in a horizontal plane along (a single forward direction of) a preset advancement direction A (while an opposite lower branch moves in a parallel horizontal plane in an opposite return direction of the same advancement direction A).

The rotation speed of the drive roller 23 controls the advancement speed of the seeding tray V (which rests on the rest plane defined by the conveyor belt 22) along the advancement direction A, which may be set and adjusted according to processing requirements.

For example, the advancement speed is adjustable, normally within a range between 300 and 1500 trays/hr (thus, considering each tray/pitch having a length, along the advancement direction A, of 800mm, the advancement speed is between 240mt/hr - i.e. 4 mt/min - and 1200 mt/hr - i.e. 20 mt/min - ).

The (upper branch of the) conveyor belt 22 defines (and coincides with) a (horizontal) rest plane B on which the seeding trays V, with their lower surface, are intended to rest (stably).

The support frame 21 has two side panels (parallel to the advancement direction A), whose distance from each other defines the (maximum) width of the rest plane B.

The conveyor belt 22 has a width that is essentially equal to (or slightly less than) the (maximum) width of the rest plane B.

The conveyor belt 22 is made of a synthetic material, e.g. rubber, polyvinylchloride (PVC) or polyurethane (PU).

The drive roller 23 is driven in rotation by an (electric) motor 230, for example, equipped with a gearbox, which is preferably supported (laterally) by the support frame 21.

The machine 10 further comprises a seeding roller indicated with reference number 30, which is configured to release a predetermined amount of seeds into the seeding tray V resting and moving on the (rest plane B of the) conveyor belt 22.

The seeding roller 30 is arranged above the (rest plane B of the) conveyor belt 22, e.g. at a certain (non-zero) distance from it, so that a seeding tray V to be seeded may be fitted (with a clearance) between the seeding roller 30 and the (rest plane B of the) conveyor belt 22.

The seeding roller 30 is rotatably associated with the support frame 21 and comprises a (horizontal) rotation axis R1 essentially orthogonal to the advancement direction A.

The seeding roller 30 comprises at least one insert bar 31 equipped with a series of suction holes aligned along an alignment direction parallel to the rotation axis R1, preferably equally spaced from each other.

Preferably, the seeding roller 30 comprises a plurality of said insert bars 31 circumferentially spaced by a predetermined circumferential distance (or pitch), for example equal to the distance between (the centre of) two adjacent and aligned and/or side-by-side cells of the seeding tray V to be seeded by said seeding roller 30.

Each insert bar 31 is connected, in a way known in itself, to a suction circuit (at least partially inside the seeding roller 30) and is configured to pick up by suction one seed at a time from a seed reservoir 32 arranged tangentially to the seeding roller 30 and to release the picked-up seed into a respective seed cell of a seeding tray V advancing on the (rest plane B of the) conveyor belt 21.

For example, the seeding roller 30 comprises a central shaft, which defines said rotation axis R1, and an outer jacket, e.g. made of light metal (such as aluminium).

Longitudinal grooves parallel to the rotation axis R1 (spaced from each other by said circumferential distance) are made on the outer jacket, which, for example, extend along the entire length of the outer jacket along respective generatrices thereof. Within each longitudinal groove a (hollow) full-length insert bar 31 is fitted, the inner axial cavity of which defines a suction pipe. The outer face of each insert bar 31 comprises sets of suction holes, e.g. defined by calibrated (radial) holes, which are aligned along the alignment direction parallel to the rotation axis R1.

A first end of each insert bar 31 is closed by a (fixed) closure element and a second end of the bar communicates with a distribution flange, which is configured to selectively connect and disconnect the plurality of insert bars 31 from the suction circuit.

For example, the distribution flange comprises a first opening (elongated along an arc of circumference) that communicates with a suction system of the suction circuit. In addition, the suction flange comprises a second opening that communicates with an exhaust system (at atmospheric pressure or compressed air).

The seeding roller 30 (i.e. its axial end equipped with the second ends of the bars) is rotatably (and tightly) associated with the distribution flange around the rotation axis R1, so that each second end of the bars is selectively located at the first opening (for an arc of rotation) and at the second opening, during rotation.

In practice, when the second end of the insert bar 31 is at the first opening, each suction hole of said insert bar 31 is in fluid communication with the (suction system of) suction circuit which allows to pick up from the reservoir 32 and retain, during said arc of rotation, a seed for each suction hole of the insert bar 31, when, by contrast, the second end of the insert bar 31 is at the second opening, each suction hole of said insert bar 31 is in fluid communication with the discharge system which allows to discharge the previously picked-up seed.

The second opening is arranged in such a way that the insert bar 31 that is in communication with it is arranged at the bottom, in a seed-release position, i.e. vertically aligned with the rotation axis R1 and interposed between the rest plane B and the rotation axis of R1 itself.

The first opening is by contrast arranged so that it has a first circumferential end aligned (along a direction parallel to the rotation axis R1) with the reservoir 32 and a second end proximal (a few centimetres away) to the second opening.

The reservoir 32 is, for example, defined by a hopper supported by the support frame 21 in a tangential and overhanging position with respect to the seeding roller 30.

For example, the seeding roller 30 is supported by the support frame 21 in a height-adjustable manner.

For this purpose, the machine 10 comprises a first assembly 40 for adjusting the distance between the seeding roller 30 and the rest plane B.

The first adjustment assembly comprises a support sub-frame 41 rigidly attached to the support frame 21 of the conveyor 20.

The support sub-frame 41 comprises a vertical guide 42, which is for example defined by two columns rising from the support sub-frame 41.

In addition, the first adjustment assembly 40 comprises a movable sub-frame 43, which is slidably associated with the vertical guide 42, along an adjustment direction orthogonal to the support plane B, i.e. vertical.

The movable sub-frame 43 comprises, for example, a pair of cylindrical (through-hole) seats adapted to be fitted onto the columns defining the vertical guide 42, so as to define a prismatic connection with them.

The movable sub-frame 43 comprises a rolling seat within which an axial end (of the central shaft) of the seeding roller 30 is accommodated in rotation, e.g. by interposing a special bearing.

Preferably, the axial end (of the central shaft) of the seeding roller 30 axially protrudes from the movable sub-frame 43.

The movable sub-frame 43 is driven to axially slide along the vertical guide by an actuator.

In a simplified embodiment, the actuator is of the manual type, such as a hand crank.

In a preferred and advantageous embodiment shown in the figures, the actuator is motor-driven.

Specifically, the actuator comprises an electric motor 44 attached to the support sub-frame 41 to whose drive shaft a worm screw 440 is associated which rises from the support sub-frame 41 and screwed into a lead screw made in the movable sub-frame 43.

A rotation of the worm screw 440 corresponds to a vertical sliding of the movable sub-frame 43 along the adjustment direction and, with it, of the seeding roller 30.

The reservoir 32 is supported by the movable sub-frame 43, e.g. with the possibility to slide (swing) along a sliding direction parallel to the rotation axis R1 of the seeding roller 30.

For example, the reservoir 32 is connected to a transmission cable, e.g. of the Bowden cable type (equipped with spring return means), which switches, by means of a special crank rotatably associated with the movable sub-frame 43, a rotation imposed (directly or indirectly) by the motor 230 of the conveyor, into an alternating sliding motion of the reservoir 32, which is for keeping the seeds in movement inside therein.

The seeding roller 30 may also have a release doctor blade (attached to the movable sub-frame 43) that is designed to slightly touch the insert bar 31 to ease the release of the seeds in the release position.

The seeding roller 30 is configured to be driven in rotation around its rotation axis R1, for example, at a predetermined and constant rotation speed.

In particular, the seeding roller 30 is driven in rotation by the motor 230 of the conveyor 20.

For this purpose, the machine 10 comprises a transmission assembly 50 interposed between the motor 230 of the conveyor and the seeding roller 30 configured to transmit a rotary motion from the motor 230 to the seeding roller 30.

For example, the transmission assembly 50 is a flexible member, i.e. a chain (or belt).

In particular, the transmission assembly 50 comprises a drive gear 51 (or drive pulley), which is rigidly connected to the drive shaft of the motor 230, e.g. it is rigidly connected to the drive roller 23 of the conveyor.

Preferably, the drive gear 51 is keyed to a shaft parallel to the drive roller 23 and made integral in rotation with it by a pair of meshing toothed wheels.

In addition, the transmission assembly 50 comprises a driven gear 52 (or driven pulley), which is connected to (the central shaft of) the seeding roller 30, for example at the axial end (of the central shaft) of the seeding roller 30 which protrudes axially from the movable sub-frame 43.

The transmission assembly 50, moreover, comprises at least one flexible member 53, for example a chain or belt, configured to transmit the rotary motion from the drive gear 51 to the driven gear 52.

For example, the transmission assembly 50 comprises an intermediate gear 54, which is rotatably coupled to the support sub-frame 41 around a rotation axis parallel to the rotation axis R1 of the seeding roller 30.

In one possible configuration, the flexible member 53 is wound around the drive gear 51, driven gear 52 and intermediate gear 54.

In an alternative and advantageous embodiment shown in the figures, the transmission assembly comprises two flexible members 53, one of which is wound around the drive gear 51 and the intermediate gear 54 and the other one wound around a further intermediate gear 54 (parallel, concentric and integral with said intermediate gear 54) and the driven gear 53.

For example, the transmission assembly 50 has a transmission ratio of 1:1.

The transmission assembly 50 also comprises one or more belt tensioners adapted to compensate for the pull of the flexible element 53 depending on the distance set between the seeding roller 30 and the rest plane B.

For the purposes of the present invention, the transmission assembly 50 comprises a friction clutch 55 configured to selectively be switched between a closed position, wherein it allows transmission of rotary motion from the motor 230 of the conveyor 20 to the seeding roller 30, and an open position, wherein it interrupts the transmission of the rotary motion from the motor 230 of the conveyor 20 to the seeding roller 30.

In particular, the friction clutch 55 is configured to (temporarily) couple and decouple at least one of the drive roller 23 or motor 230 from the seeding roller 30.

In the example shown, the friction clutch 55 is interposed between the seeding roller 30 and the driven gear 52.

For example, the friction clutch 55 comprises a first body 551 rigidly connected to (the central shaft of) the seeding roller 30, for example keyed to the central shaft of the seeding roller itself, and a second body 552 rigidly connected to the driven gear 52, wherein the driven gear 52 is for example keyed to such second body 552.

The first body 551 and the second body 552 are selectively mutually coupled and decoupled, so that it is possible to selectively switch between the closed position, in which the first body 551 and the second body 552 are made integral with each other in rotation (by friction), and the open position, in which the first body 551 and the second body 552 are disengaged from each other (and a mutual rotation with respect to the rotation axis R1 of the seeding roller 30 is allowed).

When the friction clutch 55 is in the closed position, the rotary motion imparted by the motor 230 of the conveyor 20 is transmitted (integrally) to the seeding roller 30 via the transmission assembly 50.

When the friction clutch 55 is in the open position, the seeding roller 30 is decoupled from the motor 230 of the conveyor 20 and, therefore, remains stationary, e.g. it stops/is instantly braked by appropriately calibrated frictions on the central shaft thereof and/or by a braking assembly (while the flexible member 53 and the driven gear 52 continue to rotate with the drive gear 51 and the motor 230 of the conveyor 20).

For example, the friction clutch 55 is of the pneumatic and/or electropneumatic type.

For example, the friction clutch 55 is fluidically connected to a compressed air pumping system (e.g. a compressor) via a solenoid valve.

If the solenoid valve is in an open/activated position, the pumping system is configured to hold/bring the friction clutch 55 to the closed position, if the solenoid valve is in a closed/deactivated position, the pumping system is disconnected from the friction clutch 55 and it moves to the open position.

It is not excluded, however, that the friction clutch 55 may be arranged in a different location on the transmission assembly 50.

The machine 10 further comprises a detection device configured to detect a position assumed by the seeding roller 30.

The detection device comprises, for example, a proximity sensor S1 associated, e.g. in an integral manner, with the support sub-frame 43 configured to detect a detection member D1 associated integrally (in an eccentric manner) with (the central shaft of) the seeding roller 30 (e.g. at the free end thereof protruding from the first body 551 of the friction clutch).

The proximity sensor S1 is configured to detect the passage of the detection device D1 when the seeding roller 30 is placed in a (single) predetermined angular position, preferably end-of-stroke/stop position, and generate an (electrical) signal representative of such angular position.

When the seeding roller 30 is in the angular end-of-stroke/stop position, no insert bar 31 is in the seed release position.

In addition, the machine 10 comprises a system for detecting a seeding tray V resting on a section of the rest plane B located upstream of the seeding roller 30 along the advancement direction A.

For example, the detection system is configured to detect the front end (in the advancement direction along the rest plane B) of the seeding tray V at a predetermined axial position of the rest plane along the advancement direction A.

For example, the detection system comprises an optical assembly, which has, for example, a photocell S2 and a respective reference body (aligned to the photocell along a direction horizontal and orthogonal to the advancement direction).

When the front end of the seeding tray V encounters the light beam emitted by the photocell S2, it interrupts it, and the detection system is configured to generate an (electrical) signal indicative of a predetermined axial position of the seeding tray V on the rest plane B.

For example, the optical assembly is associated with the support frame 21 of the conveyor 20, preferably in an adjustable (i.e. sliding) manner along the advancement direction A.

The machine 10 comprises an electronic control unit 100 configured to control the operation of the machine 10 in an automatic and/or semi-automatic manner.

The electronic control unit 100 comprises a processor and a memory unit.

In addition, the electronic control unit 100 includes a user interface (equipped with a screen and/or buttons, if any) for receiving information from an operator and/or issuing signals or information that may be perceived by the operator.

The electronic control unit 100 is operatively connected to the detection system in order to receive the signal emitted by it.

The electronic control unit 100 is also operatively connected to the detection device so as to receive the signal emitted by it.

The electronic control unit 100 may be operatively connected to the motor 230 of the conveyor 20, e.g. so as to control start and stop thereof.

The electronic control unit 100 may also be operatively connected to the electric motor 44 to control start and stop thereof, and thus to adjust the distance of the seeding roller 30 from the rest plane B.

For example, the electronic control unit 100 is configured to receive (e.g. via the user interface) information regarding the type/height of the seeding tray V or detect (via a special sensor) the height of the seeding tray V and control the electric motor 44 (e.g. equipped with an encoder) so that the seeding roller 30 is placed at a predetermined distance H from the rest plane B, for example where H is equal to H1 + k, where H1 is the height of the seeding tray and k is a calibrated seeding height (greater than or equal to 0).

In addition, the electronic control unit 100 is operatively connected to the friction clutch 55 of the transmission assembly 50 (i.e. to the solenoid valve connected thereto) to control its switching, alternately, between the closed position and the open position.

In a simplified embodiment of the invention, the machine 10 could have a single seeding roller 30.

In this embodiment, the system could provide, upstream of the machine 10 (i.e. of the conveyor 20), a piece of equipment (independent of the machine 1) configured to make seeding markers in the soil/loam that fills the seeding trays V.

For example, such equipment could provide a marker pad (with alternating vertical motion), configured to make seeding markers in the soil/loam that fills each cell of a seeding tray V (during a stationary step of the latter).

Alternatively, in the embodiment shown, the machine 10 comprises a marker roller 60 which is configured to make a plurality of seeding markers (or recesses) within the soil or loam filling the seeding tray V resting and transiting on the (rest plane B of the) conveyor belt 22.

The marker roller 60 is rotatably associated with the support frame 21, around a rotation axis R2 parallel to the rest plane B (i.e. horizontal and essentially orthogonal to the advancement direction A) and the rotation axis R1 of the seeding roller 30.

The marker roller 60 is arranged above the rest plane B (at a non-zero distance from it) upstream of the seeding roller 30 (in the advancement direction imposed by the conveyor 20) in the advancement direction A, so that between the marker roller 60 and the (rest plane B of the) conveyor belt 22 a seeding tray V to be seeded may be fitted (with interference from the soil/loam arranged therein).

The marker roller 60 comprises at least one set of (conical) reliefs aligned along an alignment direction parallel to the rotation axis R2, preferably equally spaced from each other.

Preferably, the marker roller 60 comprises a plurality of said sets of reliefs circumferentially spaced by a predetermined circumferential distance (or pitch), for example equal to the distance between (the centre of) two adjacent and/or aligned cells of the seeding tray V to be dug with said marker roller 60 and seeded with the seeding roller 30.

For example, each row of reliefs has an arrangement of reliefs such that it enters a respective cell of a row of cells (orthogonal to the advancement direction A) of a seeding tray V.

The marker roller 60 comprises a number of sets of reliefs equal to (or greater than) the number of sets of rows of cells (in the advancement direction A) present in the seeding tray V.

For example, the reliefs are made in a jacket associated, e.g. permanently with the marker roller 60.

For example, the marker roller 60 comprises a central shaft, which defines said rotation axis R2 on which said jacket with reliefs is wound.

Preferably, the marker roller 60 is keyed/fitted onto the central shaft removably (e.g. axially extractable), so that it may be replaced as required.

For example, the marker roller 60 is supported by the support frame 21 in a height-adjustable manner.

For this purpose, the machine 10 comprises a second adjustment assembly 70 (preferably identical to the first adjustment assembly 40) of the distance between the marker roller 60 and the rest plane B.

The second adjustment assembly 70 comprises a support sub-frame 71 rigidly attached to the support frame 21 of the conveyor 20.

The support sub-frame 71 comprises a vertical guide 72, which is for example defined by two columns rising from the support sub-frame 71.

In addition, the second adjustment assembly 70 comprises a movable sub-frame 73, which is slidably associated with the vertical guide 72, along an adjustment direction orthogonal to the rest plane B, i.e. vertical.

The movable frame 73 comprises, for example, a pair of cylindrical (through-hole) seats adapted to be fitted onto the columns defining the vertical guide 72, so as to define a prismatic connection with them.

The movable sub-frame 73 comprises a rolling seat within which an axial end (of the central shaft) of the marker roller 60 is accommodated in rotation, e.g. by interposing a special bearing.

Preferably, the axial end (of the central shaft) of the marker roller 60 protrudes axially from the movable sub-frame 73.

The movable sub-frame 73 is driven to axially slide along the vertical guide by an actuator.

In a simplified embodiment, the actuator is of the manual type, such as a hand crank.

In a preferred and advantageous embodiment shown in the figures, the actuator is motor-driven.

In particular, the actuator comprises an electric motor 74 fixed to the support sub-frame 71 to whose drive shaft an endless screw 740 is associated which rises from the support frame 71 and screwed into a nut made in the movable sub-frame 73.

A rotation of the endless screw 740 corresponds to a vertical sliding of the moving sub-frame 73 along the adjustment direction and, with it, of the marker roller 60.

The marker roller 60 is configured to be driven in rotation around its rotation axis R2, for example, at a predetermined rotation speed relative to the advancement speed of the seeding tray V set by the conveyor 20.

Preferably, rotational drive of the marker roller 60 is independent of or disengageable from the rotational drive of the seeding roller 30.

In particular, the marker roller 60 is driven in rotation by the motor 230 of the conveyor 20.

For this purpose, the machine 10 comprises a further transmission assembly 80 interposed between the motor 230 of the conveyor 20 and the marker roller 60 and configured to transmit a rotary motion from the motor 230 to the marker roller 60.

The further transmission assembly 80 is, for example, a flexible member, i.e. a chain (or belt).

In particular, the further transmission assembly 80 comprises a drive gear 81 (or drive pulley), which is rigidly connected to the drive shaft of the motor 230, e.g. it is rigidly connected to the drive roller 23 of the conveyor.

In the example illustrated, the drive gear 81 is indirectly connected to drive roller 23 and made integral thereto in rotation via the transmission assembly 50 of the seeding roller 30.

In particular, the drive gear 81 is keyed to the support shaft on which the intermediate gear 54 of the transmission assembly 50 of the seeding roller 30 is also keyed.

In practice, the drive gear 81 of the further transmission assembly 80 is parallel, coaxial and integral to said intermediate gear 54 of the drive unit 50.

In addition, the further transmission assembly 80 comprises a driven gear 82 (or driven pulley), which is connected to (the central shaft of) the marker roller 60, for example at the axial end (of the central shaft) of the marker roller 60 which protrudes axially from the movable sub-frame 53.

The further transmission assembly 80, moreover, comprises, at least, a flexible member 83, for example a chain or belt, configured to transmit the rotary motion from the drive gear 81 to the driven gear 82.

For example, the further transmission assembly 80 comprises an intermediate gear 84, which is rotatably coupled to the support sub-frame 71 around a rotation axis parallel to the rotation axis R2 of the marker roller 60.

In one possible configuration, the flexible member 83 is wound around the drive gear 81, the driven gear 82 and the intermediate gear 84.

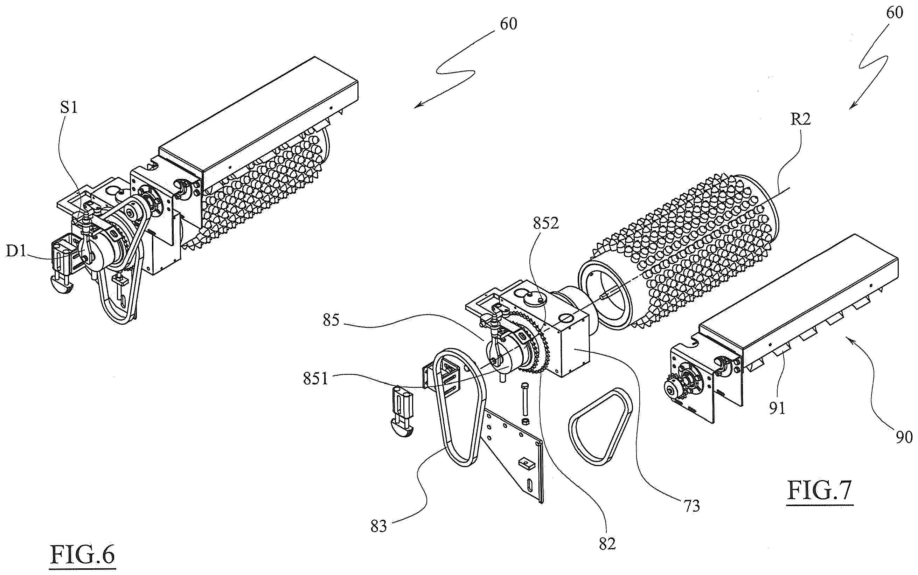

In an alternative and advantageous embodiment shown in Figures 6 and 7, the further transmission assembly 80 comprises two flexible members 83, one of which is wound around the drive gear 81 and the intermediate gear 84, and the other one is wound around a further intermediate gear 84 (parallel, coaxial and integral with said intermediate gear 84) and to the driven gear 83.

For example, the further transmission assembly 80 has a transmission ratio of 1:1.

The further transmission assembly 80 comprises one or more belt tensioners to compensate for the pull of the flexible member 83 depending on the distance set between the marker roller 60 and the rest plane B.

For the purposes of the present invention, the further transmission assembly 80 comprises a friction clutch 85 (identical to the friction clutch 55 of the transmission assembly 50) configured to selectively be switched between a closed position, in which it allows the transmission of rotary motion from the motor 230 of the conveyor 20 to the marker roller 60, and an open position, in which it interrupts the transmission of the rotary motion from the motor 230 of the conveyor 20 to the marker roller 60.

In particular, the friction clutch 85 is configured to couple and decouple (temporarily) at least one of the drive roller 23 or motor 230 from the marker roller 60.

In the example shown, the friction clutch 85 is interposed between the marker roller 60 and the driven gear 82.

For example, the friction clutch 85 comprises a first body 851 rigidly connected to (the central shaft of) the marker roller 60, for example keyed to the central shaft of the marker roller itself, and a second body 852 rigidly connected to the driven gear 82, wherein the driven gear 82 is for example keyed to said second body 852.

The first body 851 and the second body 852 are selectively coupled and decoupled from each other, so that it is possible to selectively switch between the closed position, in which the first body 851 and the second body 852 are made integral with each other in rotation by friction or by gear/teeth/helical connection, and the open position, in which the first body 851 and the second body 852 are disengaged from each other (and mutual rotation with respect to the rotation axis R1 of the marker roller 60 is allowed).

When the friction clutch 85 is in the closed position, the rotary motion imparted by the motor 230 of the conveyor 20 is transmitted (in full) to the marker roller 60 via the further transmission assembly 80.

When the friction clutch 85 is in the open position, the marker roller 60 is decoupled from the motor 230 of the conveyor 20 and, therefore, remains stationary, e.g. it stops/is instantly braked by suitably calibrated friction on the central shaft thereof and/or by a braking unit (while the flexible member 83 and the driven ring gear 82 continue to rotate with the driven gear 81 and the motor 230 of the conveyor 20).

For example, the friction clutch 85 is of the pneumatic and/or electropneumatic type.

It is not excluded, however, that the friction clutch 85 may be arranged at a different location on the further transmission assembly 80.

The machine 10 further comprises a cleaning device 90, which is configured to clean the marker roller 60 (i.e. its reliefs) of any residual soil or loam.

For example, the cleaning device could comprise a (fixed) brush rigidly attached to the movable sub-frame 73 and arranged with its longitudinal axis parallel to the rotation axis R2 of the marker roller 60, preferably above it. The brush is configured to brush (along one directrix of the marker roller 60) the marker roller 60 while the latter is rotating.

In an alternative embodiment shown in the figures, the cleaning device 90 comprises a brush roller 91, which is rotatably associated with the support frame 21, around a rotation axis parallel to the rest plane B (i.e., horizontal and substantially orthogonal to the advancement direction A) and the rotation axis R2 of the marker roller 60.

The brush roller 91 is arranged above the marker roller 60 (in contact with it).

For example, the brush roller 91 comprises a central shaft, which defines said rotation axis.

For example, the brush roller 91 is supported by the movable sub-frame 73.

The brush roller 91 is configured to be driven in rotation around its rotation axis, for example, at a predetermined and constant rotation speed, e.g., at a different speed from the marker roller 60 and/or in the reverse rotation direction from the marker roller itself.

In particular, the brush roller 91 is driven in rotation by the motor 230 of the conveyor 20 (i.e. it is driven by the driven gear 82, which takes the motion from the intermediate gear 84 connected to the drive gear 81, in turn driven by the motor 230).

For this purpose, the machine 10 comprises a (belt) transmission connecting a toothed ring gear keyed on the central shaft of the brush roller 91 with a toothed ring gear keyed on the central shaft of the marker roller 60.

The machine 10 also comprises a further detection device configured to detect a position assumed by the marker roller 60.

The further detection device comprises, for example, a proximity sensor S1 associated, e.g. in an integral manner, with the support sub-frame 73 configured to detect a detection member D1 associated integral (eccentrically) with (the central shaft of) the marker roller 60 (e.g. at the free end thereof protruding from the first body 851 of the friction clutch).

The proximity sensor S1 is configured to detect the passage of the detection member D1 when the marker roller 60 is placed in a (single) predetermined angular position, preferably end-of-stroke/stop position, and generate an (electrical) signal representative of such angular position.

When the marker roller 60 is in the angular end-of-stroke/stop position, for instance, no set of reliefs is in the position proximal to the rest plane B (with longitudinal axis orthogonal to the rest plane B).

In addition, the machine 10 comprises a further system for detecting a seeding tray V resting on a section of the rest plane B located upstream of the marker roller 60 along the advancement direction A.

For example, the further detection system is configured to detect the front end (in the advancement direction along the rest plane B) of the seeding tray V at a predetermined axial position of the rest plane along the advancement direction A.

For example, the further detection system comprises an optical assembly, which has, for example, a photocell S2 and a respective reference body (aligned to the photocell along a direction horizontal and orthogonal to the advancement direction.

When the front end of the seeding tray V encounters the light beam emitted by the photocell S2 of the further detection system, it interrupts it and the detection system is configured to generate an (electrical) signal indicative of a predetermined axial position of the seeding tray V on the rest plane B.

For example, the optical assembly is associated with the support frame 21 of the conveyor 20, preferably in an adjustable (i.e. sliding) manner along the advancement direction A.

The electronic control unit 100 is operatively connected to the further detection system so as to receive the signal emitted by it.

The electronic control unit 100 is also operatively connected to the further detection device, so as to receive the signal emitted by it.

The electronic control unit 100 may be operatively connected to the motor 230 of the conveyor 20, e.g. so as to control start and stop and (possible) speed variation thereof.

The electronic control unit 100 may, in addition, be operatively connected to the electric motor 74 to control start and stop thereof and, therefore, to adjust the distance of the marker roller 60 from the rest plane B.

For example, the electronic control unit 100 is configured to receive (e.g., via the user interface) information regarding the type/height of the seeding tray V or detect (via a special sensor) the height of the seeding tray V and control the electric motor 74 (e.g., equipped with an encoder) so that the marker roller 60 is placed at a predetermined distance from the rest plane B.

Furthermore, the electronic control unit 100 is operatively connected to the friction clutch 85 of the further transmission unit 80 (i.e. to the solenoid valve connected thereto) to control its switching, alternately, between the closed position and the open position.

According to one embodiment (shown in the figures), the machine 10 comprises a plurality of seeding rollers 30 (as described above) arranged in succession along the advancement direction A.

For example, the seeding rollers 30 differ from each other only in the arrangement of the insert bars 31 and/or the arrangement of the suction holes along them (and their axial position along the advancement direction A).

For example, each seeding roller 30 is associated with the support sub-frame 21 via a respective first adjustment unit 40, as described above.

Furthermore, preferably, each seeding roller 30 takes the rotary motion from the motor 230 of the conveyor 20, e.g. via a respective transmission assembly 50.

Although it is possible that each transmission assembly 50 has a respective drive gear 51 rigidly connected to the drive shaft of the motor 230, as described above, it is nevertheless possible to provide - as in the case illustrated in the figures - that the drive gear 51 of the transmission assembly 50 connected to the seeding roller 30 closest to the motor 230 is keyed to a shaft parallel to the motor roller 23 and made rotationally integral with it by means of a pair of meshing toothed wheels, whereas the drive gear 51 of each transmission shaft 50 connected to seeding roller 30 distal from the motor 230 is indirectly connected to the motor roller 23, i.e. it is keyed to the support shaft on which the intermediate gear 54 of the transmission assembly 50 of the seeding roller 30 proximal thereto and closer to the motor 230 is also keyed (i.e. it is parallel, coaxial and integral with said intermediate gear 54).

In any case, each transmission assembly comprises a respective friction clutch 55 that may be driven independently of the other friction clutches 55 of the other transmission assemblies 50.

Again, the machine 10 comprises a plurality of detection systems, as described above, one for each seeding roller 30

In addition, the machine 10 comprises a plurality of detection devices, as described above, one for each seeding roller 30.

The electronic control unit 100 is operatively connected to each detection system so as to receive the respective signal emitted by it.

The electronic control unit 100 is also operatively connected to each detection device so as to receive the respective signal emitted by it.

The electronic control unit 100 may also be operatively connected to each electric motor 44 to control start and stop thereof, and thus to adjust the distance of the respective seeding roller 30 from the rest plane B.

In addition, the electronic control unit 100 is operatively connected to the friction clutch 55 of each transmission assembly 50 (i.e. to the solenoid valve connected thereto) to control its switching, alternately, between the closed position and the open position.

For example, each seeding roller 30 may be driven selectively in relation to the other seeding rollers 320 to seed a respective type of seeding tray V.

Alternatively or additionally, each seeding roller 30 may be driven at the same time as the other seeding rollers 320 in order to seed into the same seeding tray, for instance more seeds into the same cell.

The electronic control unit 100 is configured, as mentioned, to control and monitor the operation of the machine 10, e.g. by operating as described hereinafter.

Referring to a working sequence, wherein a seeding tray V is fed onto the conveyor 20 (from its upstream end) and passes through the rest plane B along the advancement direction A, the operation of the machine 10 controlled and monitored by the electronic control unit 100 is described hereinafter.

Firstly, where the marker roller 60 is present, the electronic control unit 100 is configured to receive a signal from the further detection system (when the seeding tray intercepts the light beam of the respective photocell S2).

At this point, the electronic control unit 100, with a predetermined delay, is configured to control the friction clutch 85 of the further transmission assembly 80 so as to switch it to its closed position based on the received signal.

As the seeding tray V passes underneath the marker roller 60, the latter is controlled to rotate around its rotation axis R2 (at a rotation speed equal to the advancement direction of the conveyor belt 22).

In practice, the marker roller 60, while rotating (perfectly phased with the advancement of the seeding tray V), makes a seeding marker in each cell of the seeding tray by sinking into the soil or loam present therein.

For example, the electronic control unit 100 is configured to hold the friction clutch 85 in the closed position for a predetermined number of complete revolutions of the marker roller 60, e.g. for a single revolution of the marker roller.

In particular, the electronic control unit 100 is configured to receive the signal emitted by the detection device (at each complete revolution made by the marker roller 60) and control the friction clutch 85 so as to switch it to its open position after a predetermined number of revolutions made by the marker roller 60, for example each single complete revolution made by the marker roller 60 (detected by the detection device).

Subsequently or simultaneously, the electronic control unit 100 is configured to receive a signal from each detection system (when the seeding tray intercepts the light beam of the respective photocell S2).

At this point, the electronic control unit 100, e.g. with a predetermined delay, is configured to control the friction clutch 55 of the respective transmission assembly 50 so as to switch it to its closed position based on the respective signal received.

As the seeding tray V passes under the respective seeding roller 30, the latter is controlled to rotate around its rotation axis R1 (at a rotation speed equal to the advancement speed of the conveyor belt 22).

In practice, the seeding roller 30 during its rotation (perfectly in phase with the advancement of the seeding tray V) releases a seed in each seeding cell (previously made in each cell) of the seeding tray V.

For example, the electronic control unit 100 is configured to hold the friction clutch 55 of each transmission assembly 50 in the closed position for a predetermined number of complete revolutions of the seeding roller 30, e.g. for a single revolution thereof.

In particular, the electronic control unit 100 is configured to receive the signal emitted by each detection device (at each complete revolution made by the respective seeding roller 30) and control the friction clutch 55 so as to switch it to its open position after a predetermined number of revolutions made by the seeding roller 50, for example each single complete revolution made by the seeding roller 30 (detected by the respective detection device).

The scope of the invention is limited to the appended claims.

## Claims

1. A seeding machine (10) comprising:
- a frame (21);
- a conveyor (20) defining a rest plane (B) for seeding trays (V) and equipped with a motor (230) configured to advance the seeding trays (V) resting on the rest plane (B) along an advancement direction (A);
- a seeding roller (30) rotatably associated with the frame, around a rotation axis (R1) parallel to the rest plane (B), and arranged above the rest plane (B);
- a transmission assembly (50) interposed between the motor (230) of the conveyor (20) and the seeding roller (30) configured to transmit a rotary motion from the motor (230) to the seeding roller (30);
**characterised in that** the transmission assembly (50) comprises a friction clutch (55) configured to be selectively switched between a closed position, in which it allows the transmission of the rotary motion from the motor (230) of the conveyor (20) to the seeding roller (30), and an open position, in which it interrupts the transmission of the rotary motion from the motor (230) of the conveyor (20) to the seeding roller (30).

2. The machine (10) according to claim 1, which comprises a system for detecting a seeding tray (V) resting on a section of the rest plane (B) located upstream of the seeding roller (30) along the advancement direction (A).

3. The machine (10) according to the preceding claim, which comprises an electronic control unit (100) operatively connected to the detection system and to the friction clutch (55), wherein the electronic control unit (100) is configured to:
- receive a signal from the detection system;
- control the friction clutch (55) so as to switch it to its closed position on the basis of the signal received.

4. The machine (10) according to the preceding claim, wherein the electronic control unit (100) is configured to:
- keep the friction clutch (55) in the closed position for a predetermined whole number of full revolutions of the seeding roller (30).

5. The machine (10) according to the preceding claim, wherein the electronic control unit (100) is configured to:
- control the friction clutch (55) so as to switch it to its open position after a predetermined whole number of revolutions performed by the seeding roller (30).

6. The machine (10) according to claim 1, which comprises an assembly (40) for adjusting a distance between the seeding roller (30) and the rest plane (B) of the conveyor (20).

7. The machine (10) according to the preceding claim, wherein the adjustment assembly (40) is motorised.

8. The machine (10) according to claim 1, which comprises a marker roller (60) rotatably associated with the support frame (21), around a rotation axis (R2) parallel to the rest plane (B) and to the rotation axis (R1) of the seeding roller (30), wherein the marker roller (60) is arranged above the rest plane (B) upstream of the seeding roller (30) in the advancement direction (A).

9. The machine (10) according to the preceding claim, which comprises a further transmission assembly (80) interposed between the motor (230) of the conveyor (20) and the marker roller (60) configured to transmit a rotary motion from the motor (230) to the marker roller (60) and equipped with a further friction clutch (85) configured to be selectively switched between a closed position, in which it allows the transmission of the rotary motion from the motor (230) of the conveyor (20) to the marker roller (60), and an open position, in which it interrupts the transmission of the rotary motion from the motor (230) of the conveyor (20) to the marker roller (60).

10. The machine (10) according to claim 1, which comprises a plurality of seeding rollers (30) with mutually parallel rotation axes (R1) arranged in succession on the rest plane (B) along the advancement direction (A).

11. The machine (10) according to the preceding claim, wherein each seeding roller (30) is driven selectively or simultaneously with respect to the other seeding rollers (30) and/or is configured to seed a respective type of seeding trays (V) or to seed in the same tray (V).

## Patentansprüche

1. Sämaschine (10), umfassend:
- einen Rahmen (21);
- einen Förderer (20), der eine Auflageebene (B) für Aussaatschalen (V) definiert und mit einem Motor (230) ausgestattet ist, der konfiguriert ist, um die Aussaatschalen (V), die auf der Auflageebene (B) aufliegen, entlang einer Vorlaufrichtung (A) vorwärts zu bewegen;
- eine Aussaatwalze (30), die drehbar um eine Drehachse (R1) parallel zu der Auflageebene (B) mit dem Rahmen assoziiert und oberhalb der Auflageebene (B) angeordnet ist;
- eine Übertragungsanordnung (50), die zwischen den Motor (230) des Förderers (20) und die Aussaatwalze (30) eingefügt und konfiguriert ist, um eine Drehbewegung von dem Motor (230) auf die Aussaatwalze (30) zu übertragen;
**dadurch gekennzeichnet, dass** die Übertragungsanordnung (50) eine Reibungskupplung (55) umfasst, die konfiguriert ist, um selektiv zwischen einer geschlossenen Stellung, in der sie die Übertragung der Drehbewegung von dem Motor (230) des Förderers (20) auf die Aussaatwalze (30) ermöglicht, und einer offenen Stellung, in der sie die Übertragung der Drehbewegung von dem Motor (230) des Förderers (20) auf die Aussaatwalze (30) unterbricht, umgeschaltet zu werden.

2. Maschine (10) nach Anspruch 1, die ein System zum Erfassen einer Aussaatschale (V) umfasst, die auf einem Abschnitt der Auflageebene (B) aufliegt, der sich entlang der Vorlaufrichtung (A) stromaufwärts von der Aussaatwalze (30) befindet.

3. Maschine (10) nach dem vorherigen Anspruch, die eine elektronische Steuereinheit (100) umfasst, die funktionsfähig mit dem Erfassungssystem und mit der Reibungskupplung (55) verbunden ist, wobei die elektronische Steuereinheit (100) zu Folgendem konfiguriert ist:
- Empfangen eines Signals von dem Erfassungssystem;
- Steuern der Reibungskupplung (55), um sie basierend auf dem empfangenen Signal in die geschlossene Stellung umzuschalten.

4. Maschine (10) nach dem vorherigen Anspruch, wobei die elektronische Steuereinheit (100) zu Folgendem konfiguriert ist:
- Halten der Reibungskupplung (55) für eine vorbestimmte ganze Anzahl von Umdrehungen der Aussaatwalze (30) in der geschlossenen Stellung.

5. Maschine (10) nach dem vorherigen Anspruch, wobei die elektronische Steuereinheit (100) zu Folgendem konfiguriert ist:
- Steuern der Reibungskupplung (55), um sie nach einer vorbestimmten ganzen Anzahl von Umdrehungen der Aussaatwalze (30) in ihre offene Stellung umzuschalten.

6. Maschine (10) nach Anspruch 1, die eine Anordnung (40) zum Einstellen eines Abstands zwischen der Aussaatwalze (30) und der Auflageebene (B) des Förderers (20) umfasst.

7. Maschine (10) nach dem vorherigen Anspruch, wobei die Einstellanordnung (40) motorisiert ist.

8. Maschine (10) nach Anspruch 1, die eine Markierungswalze (60) umfasst, die drehbar um eine Drehachse (R2) parallel zu der Auflageebene (B) und zu der Drehachse (R1) der Aussaatwalze (30) mit dem Tragrahmen (21) assoziiert ist, wobei die Markierungswalze (60) oberhalb der Auflageebene (B) in Vorlaufrichtung (A) stromaufwärts von der Aussaatwalze (30) angeordnet ist.

9. Maschine (10) nach dem vorherigen Anspruch, die eine weitere Übertragungsanordnung (80) umfasst, die zwischen den Motor (230) des Förderers (20) und die Markierungswalze (60) eingefügt und konfiguriert ist, um eine Drehbewegung von dem Motor (230) auf die Markierungsrolle (60) zu übertragen, und mit einer weiteren Reibungskupplung (85) ausgestattet ist, die konfiguriert ist, um selektiv zwischen einer geschlossenen Stellung, in der sie die Übertragung der Drehbewegung von dem Motor (230) des Förderers (20) auf die Markierungsrolle (60) ermöglicht, und einer offenen Stellung, in der sie die Übertragung der Drehbewegung von dem Motor (230) des Förderers (20) auf die Markierungsrolle (60) unterbricht, umgeschaltet zu werden.

10. Maschine (10) nach Anspruch 1, die eine Vielzahl von Aussaatwalzen (30) mit zueinander parallelen Drehachsen (R1) umfasst, die entlang der Vorlaufrichtung (A) hintereinander in der Auflageebene (B) angeordnet sind.

11. Maschine (10) nach dem vorherigen Anspruch, wobei jede Aussaatwalze (30) selektiv oder gleichzeitig in Bezug auf die anderen Aussaatwalzen (30) angetrieben wird und/oder konfiguriert ist, um einen jeweiligen Typ von Aussaatschalen (V) auszusäen oder in dieselbe Schale (V) zu säen.

## Revendications

1. Semoir (10) comprenant :
- un châssis (21) ;
- une bande transporteuse (20) définissant un plan de repos (B) pour les plateaux de semis (V) et équipé d'un moteur (230) configuré pour faire avancer les plateaux de semis (V) reposant sur le plan de repos (B) le long d'une direction d'avancement (A) ;
- un rouleau de semis (30) associé de manière rotative au cadre, autour d'un axe de rotation (R1) parallèle au plan de repos (B), et disposé au-dessus du plan de repos (B) ;
- un ensemble de transmission (50) interposé entre le moteur (230) de la bande transporteuse (20) et le rouleau de semis (30) configuré pour transmettre un mouvement de rotation du moteur (230) au rouleau de semis (30) ;
**caractérisé en ce que** l'ensemble de transmission (50) comprend un embrayage à friction (55) configuré pour être commuté de manière sélective entre une position fermée, dans laquelle il permet la transmission du mouvement de rotation du moteur (230) de la bande transporteuse (20) au rouleau de semis (30), et une position ouverte, dans laquelle il interrompt la transmission du mouvement de rotation du moteur (230) de la bande transporteuse (20) au rouleau de semis (30).

2. Machine (10) selon la revendication 1, comprenant un système de détection d'un plateau de semis (V) reposant sur une section du plan de repos (B) située en amont du rouleau de semis (30) le long de la direction d'avancement (A).

3. Machine (10) selon la revendication précédente, comprenant une unité de commande électronique (100) connectée de manière opérationnelle au système de détection (55), dans laquelle l'unité de commande électronique (100) est configurée pour :
- recevoir un signal du système de détection ;
- contrôler l'embrayage à friction (55) afin de le faire basculer en position fermée sur la base du signal reçu.

4. Machine (10) selon la revendication précédente, dans laquelle l'unité de commande électronique (100) est configurée pour :
- maintenir l'embrayage à friction (55) en position fermée pendant un nombre entier prédéterminé de tours complets du rouleau de semis (30).

5. Machine (10) selon la revendication précédente, dans laquelle l'unité de commande électronique (100) est configurée pour :
- contrôler l'embrayage à friction (55) de le faire basculer en position ouverte après un nombre entier prédéterminé de tours complets effectués par le rouleau de semis (30).

6. Machine (10) selon la revendication 1, comprenant un ensemble (40) permettant de régler une distance entre le rouleau de semis (30) et le plan de repos (B) de la bande transporteuse (20).

7. Machine (10) selon la revendication précédente, dans laquelle l'ensemble de réglage (40) est motorisé.

8. Machine (10) selon la revendication 1, comprenant un rouleau marqueur (60) associé en rotation au châssis de support (21), autour d'un axe de rotation (R2) parallèle au plan de repos (B) et à l'axe de rotation (R1) du rouleau de semis (30), le rouleau marqueur (60) étant disposé au-dessus du plan de repos (B) en amont du rouleau de semis (30) dans la direction d'avancement (A).

9. Machine (10) selon la revendication précédente, comprenant un autre ensemble de transmission (80) interposé entre le moteur (230) de la bande transporteuse (20) et le rouleau marqueur (60) configuré pour transmettre un mouvement de rotation du moteur (230) au rouleau marqueur (60) et équipé d'un autre embrayage à friction (85) configuré pour être basculé de manière sélective entre une position fermée, dans laquelle il permet la transmission du mouvement de rotation du moteur (230) de la bande transporteuse (20) au rouleau marqueur (60), et une position ouverte, dans laquelle il interrompt la transmission du mouvement de rotation du moteur (230) de la bande transporteuse (20) au rouleau marqueur (60).

10. Machine (10) selon la revendication 1, comprenant une pluralité de rouleaux de semis (30) avec des axes de rotation (R1) parallèles entre eux, disposés en succession sur le plan de repos (B) le long de la direction d'avancement (A).

11. Machine (10) selon la revendication précédente, dans laquelle chaque rouleau de semis (30) est entraîné de manière sélective ou simultanée par rapport aux autres rouleaux de semis (30) et/ou est configuré pour semer avec un type respectif de plateaux de semis (V) ou pour semer dans le même plateau (V).
